# EUROPEAN PATENT SPECIFICATION

(11) **EP 0 986 458 B1**
(45) Date of publication and mention of the grant of the patent: **15.09.2004**
(21) Application number: 98926003.9
(22) Date of filing: 22.05.1998
(51) Int. Cl.: B32B 1/02, B32B 5/18, B65D 1/02, B29C 44/04, B29C 49/04, C08J 9/08

(54) **AN EXTRUDED/BLOW MOULDED BOTTLE, AS WELL AS A METHOD AND MATERIAL FOR PRODUCING THE BOTTLE**
EXTRUDIERTE/BLASGEFORMTE FLASCHE, SOWIE VERFAHREN UND MATERIAL ZU DEREN HERSTELLUNG
BOUTEILLE EXTRUDEE/MOULEE PAR SOUFFLAGE, PROCEDE DE FABRICATION CORRESPONDANT ET MATERIAU UTILISE

(30) Priority: 29.05.1997 SE 9702026
(43) Date of publication of application: 22.03.2000
(73) Proprietor: Tetra Laval Holdings & Finance S.A., 1009 Pully (CH)
(72) Inventor: ANDERSSON, Thorbjörn, S-240 17 Sandby (SE); ANDREN, Sven, S-226 53 Lund (SE); BENTMAR, Mats, S-233 37 Svedala (SE); DALHOLM, Patrik, S-224 77 Lund (SE); OVEBY, Claes, S-232 51 Akarp (SE); WALLEN, Göran, S-244 63 Kävlinge (SE)
(74) Representative: Sundell, Hakan
(86) International application number: PCT/SE1998/000970
(87) International publication number: WO 1998/053986

(56) References cited:
- EP-A- 0 575 809
- WO-A-97/28050
- DE-A- 1 504 359
- DE-A- 19 511 611
- DE-A- 19 525 198
- GB-A- 2 097 403

## Description

### TECHNICAL FIELD

The present invention relates to an extruded/blow moulded bottle having an extruded wall structure comprising an intermediate layer of foamed plastic and outer solid layers of plastic.

### BACKGROUND ART

Bottles and similar containers of plastic are conventionally produced by a combined extrusion/ blow moulding process in which granulate starting material of plastic is fed into a screw/ cylinder apparatus together with other additives selected for the container production process. By means of the rotating screw fitted with helical blade, the starting material is advanced through the cylinder at the same time as it is melted and the above-mentioned additives are distributed and thoroughly mixed throughout the entire molten plastic mass. The molten, homogeneous plastic mass is pressed through a tool (nozzle) which is disposed at the front end of the apparatus and is provided with an annular aperture for forming a tube or hose. The extruded hose is inserted into and accommodated by a mould cavity formed by moving mould halves, whereafter the hose end thus accommodated between the mould halves is cut and inflated to the inner walls of the mould cavity by means of a blowpipe which is inserted in the hose and is in valve-regulated communication with a source of high pressure air. The compressed air communication is broken and the mould halves are separated from one another for removing the extruded/blow moulded container whose geometric outer configuration exactly corresponds with the configuration defined by the inner walls of the mould cavity.

In the above-described method, for example bottles of high density polyethylene (HDPE) are produced for milk and similar liquid foods. With the aid of modern, high speed filling machines, the freshly produced, empty bottles are filled with the pertinent contents, whereafter the filled bottles are sealed by means of a suitable sealing agent or capsule device which is applied in liquid-tight fashion on the bottle over the open bottle neck. Filled bottles discharged from the filling machine are thereafter collected in stacks or groups suitable for distribution, for further transport out to a sale or consumption point for the packed product.

While the handling of the filled bottles takes place by machine as far as this is at all possible, there nevertheless occur occasions when the bottles or bottle groups must be handled manually as in, for example, certain reloading and relocation operations.

A serious drawback inherent in the prior art extruded/blow moulded bottles of high density polyethylene (HDPE) is that they are excessively, but of necessity, relatively thick-walled and therefore unnecessarily heavy and unwieldy to handle manually. The relatively large wall thickness is, on the other hand, necessary in order that the requisite mechanical strength and rigidity be imparted to the bottle, and such mechanical strength and rigidity deteriorates dramatically and becomes insufficient if the wall thickness of the bottle is less than a minimum value which, at least to some extent, is determined by the relevant bottle shape. In addition to its excessive, but necessary wall thickness, the prior art extruded/blow moulded bottle consumes an unnecessary amount of material and is, therefore, costly in production.

### OBJECTS OF THE INVENTION

One object of the present invention is thus to obviate the above-described drawbacks inherent in the prior art technology.

A further object of the present invention is to realise an extruded/blow moulded bottle of plastic with greatly reduced material weight, but maintained desired superior mechanical strength and rigidity in order to be able to be handled easily and conveniently.

These and other objects and advantages will be attained according to the present invention as a result of the extruded/blow moulded bottle as defined in independent Claim 1.

Further expedient embodiments of the bottle according to the present invention have moreover been given the characterizing features as set forth in appended subclaims 2 to 4.

### OUTLINE OF THE INVENTION

The material in the foamed intermediate layer in the extruded/blow moulded plastic bottle should thus consist of a mixture of a first rigid polymer component and a second, soft (ductile) polymer component, of which the first, rigid component forms the skeleton or interstices in the foamed wall layer structure, while the second, soft (ductile) polymer component forms a skin or cell wall between the above-mentioned skeleton or interstices, respectively. Preferably, the rigid and ductile (soft) polymer components are of the same polymer type.

Said rigid polymer component in the foamed intermediate layer material, in the extruded/blow moulded plastic bottle according to the present invention is selected from the group comprising high density polyethylene (HDPE) and high melt-strength polypropylene (HMS PP), while said ductile (soft) polymer component in the foamed intermediate layer material is selected from the group comprising low density polyethylene (LDPE) and polypropylene for general purposes (GP PP).

A particularly preferred combination of rigid polymer component and ductile (soft) polymer component is, according to the present invention, low density polyethylene (LDPE) and high density polyethylene (HDPE) in which the mixing ratio of LDPE to HDPE is 1:3-3:1 based on weight. Optimum results concerning the weight and rigidity in the extruded/blow moulded plastic bottle according to the invention are achieved when the mixing ratio of LDPE to HDPE is 1.5:1.

The rigid, skeleton-forming polymer component in the foamed intermediate layer in the extruded/blow moulded plastic bottle according to the present invention may also be defined as a polymer component which has a high crystallisation degree (high crystalline), high density, few short chain branches per 1000 C atoms and no long chain branches at all. Correspondingly, the ductile (soft) polymer component may be defined as a polymer component which has low crystallisation degree (low crystalline), low density, many short chain branches per 1000 C atoms and also long chain branches. Concerning the rigid polymer component of HDPE, this implies a density in the range of 950-970 and a melt index in the range of 0.5-1.5, while, for the ductile (soft) polymer component of LDPE, this implies a density in the range of 915-922 and a melt index in the range of 4.5-8.5.

The chemical blowing agent with which the mixture of the rigid and ductile (soft) polymer components is to be expanded or foamed may, according to the present invention, be sodium hydrocarbonate and/or citric acid, preferably a mixture of these two blowing agents in stoichiometric proportions. The total quantity of blowing agent which is employed in the production of an extruded/blow moulded plastic bottle by the method according to the present invention may vary from approx. 0.5 to approx. 2.5% of the total weight of the mixture.

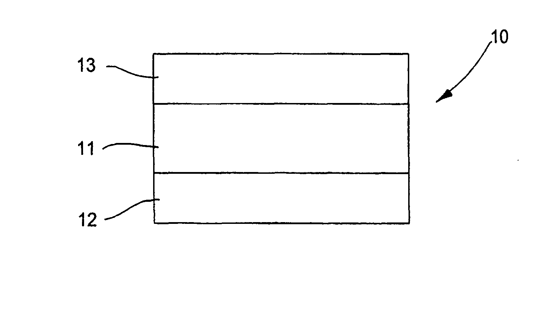

### BRIEF DESCRIPTION OF THE ACCOMPANYING DRAWING

The present invention will now be described in greater detail hereinbelow with the aid of a preferred but non-restrictive Example and with reference to the accompanying Drawing which schematically illustrates a cross section of a wall material of an extruded/blow moulded plastic bottle according to the present invention.

### DESCRIPTION OF PREFERRED EMBODIMENT

According to the preferred embodiment which is shown schematically on the accompanying Drawing, the wall material carrying the generic reference numeral 10 comprises, in an extruded/blow moulded plastic bottle, a central layer 11 and two outer skin layers 12 and 13 on both sides of the central layer 11.

The material in the central, foamed layer 11 consists, as was mentioned above, of a mixture of a first rigid polymer component and a second ductile (soft) polymer component which, in the relevant embodiment, is an HDPE component and an LDPE component, respectively, of which the HDPE component has a density in the range of 950-970 and a melt index in the range of 0.1-1.5, while, correspondingly, the LDPE component has a density in the range of 915-922 and a melt index in the range of 4.5-8.5. The mixing ratio between the two polymer components (i.e. LDPE;HDPE) should be between 1:3 and 3:1, preferably 1.5:1, in order to give optimum results as regards rigidity/ thickness of the produced plastic bottle.

The two outer wall layers 12 and 13 may be the same or different, but are preferably the same and produced from a polymer possessing a high modulus of elasticity, for example HDPE, whereby high strength and rigidity wilt be attained as a result of the so-called I-beam effect, as will be well-known to a person skilled in the art.

The relative thicknesses of the central, foamed wall layer 11 and the two outer homogeneous wall layers 12 and 13 are preferably such that the central, foamed wall layers 11 takes up approx. 50-100% of the total weight of the wall material, while the two outer, homogeneous layers 12 and 13 together constitute approx. 0-50% of the total weight of the wall material.

A bottle for packing and transporting liquid foods, for example milk, for refrigerated distribution is produced according to the present invention by means of a combined (co-)extrusion/ blow moulding process comprising a first (co-)extrusion step and a subsequent, second blow moulding step.

Granulate starting material containing, i) a first rigid polymer component, preferably HDPE, ii) a second ductile (soft) polymer component (LDPE) and iii) a chemical blowing agent, preferably sodium hydrocarbonate and/or citric acid, is fed into a screw/cylinder apparatus through a replenishment hopper disposed at the rear end of the apparatus. The ratio between the components included in the granulate starting material is such that the ratio of the ductile (soft) LDPE component to the rigid HDPE component lies within the range of 1:3-3:1, preferably 1.25:1. The quantity of the chemical blowing agent should be 0.5-2.5% of the total weight of the granulate starting material. The infed granulate starting material is subjected to high temperature in an infeed zone of the screw/cylinder apparatus in which the free area between the walls of the cylinder and the screw core is minimised in order to create superior mixing conditions for the infed components in the starting material and, at the same time as the starting material is heated to such an elevated temperature that the chemical blowing agent (sodium hydrocarbonate and citric acid) is decomposed for the formation of carbon dioxide and sodium hydrocarbonate and citric acid residues acting as nucleation seats in the molten plastic mass.

The molten, homogeneously mixed plastic starting material is advanced by the rotating screw fitted with helical blades from the infeed zone to a further compression zone, at the same time as the starting material is cooled for the formation of a cool homogeneous mixture under a pressure of between 200 and 300 bar excess pressure. At this high pressure, the released carbon dioxide is converted into overcritical state.

The cooled, pressurised plastic melt is thereafter forced out through a tool (nozzle) which is disposed at the front end of the screw/cylinder apparatus and is provided with an annular nozzle aperture, for the formation of a hose at the same time as the overcritical carbon dioxide instantaneously expands at the pressure transition from the above-mentioned excess pressure of 200-300 bar to normal atmospheric pressure, for the formation of the foamed wall layer structure.

The extruded, foamed hose of LDPE/HDPE is introduced into the region between two movable mould halves which are brought together for the formation of a mould cavity in which the hose is accommodated. The hose accommodated in the mould cavity is cut and the two mould halves are transferred to a mould blowing station in which the hose portion accommodated between the mould halves is inflated, by means of a blowpipe inserted into the hose, towards the inner walls in the mould cavity defined by the mould halves. Thereafter, the mould halves are separated from one another for removing (or stripping) the blow moulded bottle whose geometric outer configuration thus substantially corresponds to the inner mould cavity configuration.

In an alternative embodiment, the above-mentioned screw/ cylinder apparatus may be supplemented with at least one additional screw/ cylinder apparatus connected to the same common tool for co-extrusion of solid (dense) outer layers 12 and 13, as shown on the Drawing. Such a wall structure affords an extremely high mechanical strength and rigidity at very low material consumption seen as a whole.

In the above-described method extruded/blow moulded plastic bottles according to the invention may be produced with a nominal inner volume of 11. with the same or comparable rigidity and strength as a conventional bottle produced from HDPE, but with up to 30% less material consumption.

## Claims

1. An extruded/blow moulded bottle having an extruded wall structure (10) comprising an intermediate layer (11) of foamed plastic and outer, solid layers (12 and 13) of plastic, **characterized in that** the plastic of the foamed intermediate layer (11) is a mixture of a first, rigid polymer component being selected from the group comprising high density polyethylene and high melt-strength polypropylene, and a second ductile (soft) polymer component being selected from the group comprising low density polyethylene and polypropylene for general purposes, that said plastic of the outer, solid layers (12 and 13) is of the same type as said rigid polymer component of the foamed intermediate layer (11), and **in that** all layers (11,12,13) are produced through a coextrusion process.

2. The extruded/blow moulded bottle as claimed in claim 1,
**characterized in that** the mixing ratio of the first, rigid polymer component to the second, ductile (soft) polymer component in the foamed plastic layer (11) is between 1:3 and 3:1.

3. The extruded/blow moulded bottle as claimed in any of claims 1 and 2,
**characterized in that** the central, foamed plastic layer (11) takes up between 50 and 100% of the total weight of the wall material, while the two outer, surrounding plastic layers (12 and 13) together take up between 0 and 50% of the total weight of the wall material.

4. The extruded/blow moulded bottle as claimed in any of claims 1-3,
**characterized in that** the two outer, surrounding layers (12 and 13) display substantially the same layer thicknesses.

## Patentansprüche

1. Eine extrudierte/blasgeformte Flasche mit einer Wandstruktur (10) aus einer Zwischenschicht (11) aus Schaumstoff und soliden Außenschichten (12 und 13) ist **dadurch gekennzeichnet, dass** der Kunststoff der geschäumten Zwischenschicht (11) eine Mischung aus einem ersten festen Polymerbestandteil aus der Gruppe Polyethylen hoher Dichte und Polypropylen hoher Schmelzfestigkeit und eines zweiten dehnbaren (weichen) Polymerbestandteiles aus der Gruppe Polyethylen niedriger Dichte und Allzweck-Polypropylen ist, dass der Kunststoff der soliden Außenschichten (12 und 13) von der gleichen Art ist, wie der feste Polymerbestandteil der geschäumten Zwischenschicht (11), und dass alle Schichten (11, 12, 13) mit einem Koextrusionsverfahren hergestellt sind.

2. Die extrudierte/blasgeformte Flasche nach Anspruch 1 ist **dadurch gekennzeichnet, dass** das Mischverhältnis des ersten, festen Polymerbestandteils und des zweiten, dehnbaren (weichen) Polymerbestandteil in der Schaumstoffschicht (11) zwischen 1:3 und 3:1 liegt.

3. Die extrudierte/blasgeformte Flasche nach einem der Ansprüche 1 und 2 ist **dadurch gekennzeichnet, dass** die zentrale Schaumstoffschicht (11) zwischen 50% und 100% des Gesamtgewichts des Wandwerkstoffs ausmacht, während die beiden äußeren, umgebenden Kunststoff-Schichten (12 und 13) zusammen zwischen 0% und 50% des Gesamtgewichts des Wandwerkstoffs ausmachen.

4. Die extrudiert/blasgeformte Flasche nach einem der Ansprüche 1 - 3 ist **dadurch gekennzeichnet, dass** die beiden Außenschichten (12 und 13) im Wesentlichen die selbe Schichtdicke aufweisen.

## Revendications

1. Bouteille extrudée/moulée par soufflage comportant une structure de paroi extrudée (10) comprenant une couche intermédiaire (11) en mousse de matière plastique et des couches extérieures pleines (12 et 13) en matière plastique, **caractérisée en ce que** la matière plastique de la couche intermédiaire en mousse (11) est un mélange d'un premier composant polymère rigide qui est sélectionné parmi le groupe comprenant le polyéthylène haute densité et le polypropylène à haute résistance à la fusion, et d'un deuxième composant polymère ductile (mou) qui est sélectionné parmi le groupe comprenant le polyéthylène basse densité et le polypropylène à usage général, **en ce que** ladite matière plastique des couches extérieures pleines (12 et 13) est du même type que ledit composant polymère rigide de la couche intermédiaire en mousse (11), et **en ce que** toutes les couches (11, 12, 13) sont produites à l'aide d'un processus de co-extrusion.

2. Bouteille extrudée/moulée par soufflage selon la revendication 1, **caractérisée en ce que** le rapport de mélange du premier composant polymère rigide au deuxième composant polymère ductile (mou) dans la couche de mousse de matière plastique (11) est compris entre 1:3 et 3:1.

3. Bouteille extrudée/moulée par soufflage selon l'une quelconque des revendications 1 et 2, **caractérisée en ce que** la couche centrale en mousse de matière plastique, (11) constitue entre 50 et 100 % du poids total du matériau de paroi, tandis que les deux couches en matière plastique extérieures d'entourage (12 et 13) constituent à elles deux entre 0 et 50 % du poids total du matériau de paroi.

4. Bouteille extrudée/moulée par soufflage selon l'une quelconque des revendications 1 à 3, **caractérisée en ce que** les deux couches extérieures d'entourage (12 et 13) présentent sensiblement les mêmes épaisseurs de couche.
